# EUROPEAN PATENT SPECIFICATION

(11) **EP 2 208 759 B1**
(45) Date of publication and mention of the grant of the patent: **10.04.2013**
(21) Application number: 08847939.9
(22) Date of filing: 07.11.2008
(51) Int. Cl.: C08L 67/00, B29C 45/00, C08J 3/24, B29K 67/00

(54) **PROCESS FOR PRODUCTION OF MOLDED POLYLACTIC ACID RESIN ARTICLE, COMPOUND COMPRISING A CRYSTALLIZATION-INDUCING MASTER BATCH FOR USE IN THE PROCESS, AND MOLDED POLYLACTIC ACID RESIN ARTICLE**
VERFAHREN ZUR HERSTELLUNG EINES GEFORMTEN POLYMILCHSÄUREHARZARTIKELS, MISCHUNG MIT EINEM KRISTALLISATIONSAUSLÖSER-MASTERBATCH ZUR VERWENDUNG IN DIESEM VERFAHREN, UND GEFORMTER POLYMILCHSÄUREHARZARTIKEL
PROCÉDÉ DE PRODUCTION D'UN ARTICLE MOULÉ EN RÉSINE D'ACIDE POLYLACTIQUE, COMPOSÉ AVEC UN MÉLANGE MAÎTRE D'UN INDUCTEUR DE CRISTALLISATION DESTINÉ À ÊTRE UTILISÉ DANS LE PROCÉDÉ, ET ARTICLE MOULÉ EN RÉSINE D'ACIDE POLYLACTIQUE

(30) Priority: 08.11.2007 JP 2007290505
(43) Date of publication of application: 21.07.2010
(73) Proprietor: Dainichiseika Color & Chemicals Mfg. Co., Ltd., Chuo-ku Tokyo 103-8383 (JP)
(72) Inventor: SHIBATA, Masayuki, Tokyo 103-8383 (JP); YANAI, Yuichi, Tokyo 103-8383 (JP); IMAI, Takahiro, Tokyo 103-8383 (JP); UENO, Hiromichi, Tokyo 103-8383 (JP); KONNO, Yoshinori, Tokyo 103-8383 (JP); ITO, Junichi, Tokyo 103-8383 (JP); OSANAI, Takaaki, Tokyo 103-8383 (JP); NAKAMURA, Michiei, Tokyo 103-8383 (JP)
(74) Representative: Blodig, Wolfgang
(86) International application number: PCT/JP2008/070351
(87) International publication number: WO 2009/060959

(56) References cited:
- JP-A- 2005 220 171
- JP-A- 2008 031 457
- JP-T- 2007 520 609
- JP-T- 2008 509 261
- US-A1- 2007 231 365

## Description

### Technical Field

This invention relates to a process for the production of a polylactic acid resin molding, a compound comprising a crystallization-inducing master batch for use in the process, and the polylactic acid resin molding. More specifically, the present invention is concerned with a process for producing a polylactic acid resin molding with improved physical properties, which includes using a master batch - said master batch containing a crystallization-inducing polylactic acid resin with crosslinked points formed therein - as a crystallization inducer for providing a molding of a polylactic acid resin as a feed material as a principal component with improved physical properties, and holding crystal formation conditions for the polylactic acid resin in a molding stage to allow crystallization of the polylactic acid resin to proceed such that the polylactic acid resin molding is obtained, the crystallization inducer for use in the process, the master batch containing the crystallization inducer, and the polylactic acid resin molding.

### Background Art

As regenerable high-molecular materials replaceable for petroleum-derived high-molecular materials in view of the depletion problem of fossil resources and effects on the environment, high-molecular materials making use of plant-derived raw materials, that is, so-called biomass plastics are attracting attention in recent years as materials capable of reducing the pollutant load on the environment. Typical one of these is a polylactic acid. However, a polylactic acid is accompanied by a drawback that, although it is a crystalline polymer by itself, the heat resistance of its molding is as low as from 50°C to 55°C and heating of the molding beyond this temperature results in a deformation.

The above-described drawback is attributed to an extremely slow crystallization speed of the polylactic acid after its melt molding so that, in a state that the polylactic acid melted in a molding machine has been removed from a mold subsequent to its molding, substantially no crystallization has been allowed to proceed in the resultant polylactic acid molding. As a method for improving this drawback, it is practiced to add fine powder of an inorganic material, such as talc, as a nucleating agent in the polylactic acid and to promote crystallization of the polylactic acid after its molding and removal from a mold (Patent Documents 1, 2, 3 and 4). As these nucleating agents are inorganic materials, this method involves another drawback that the resulting polylactic acid moldings are reduced in transparency, specifically are opaque and white, such as in JP 2005 220171.

Patent Document 1: JP-B-3,410,075
Patent Document 2: JP-A-2003-301097
Patent Document 3: JP-A-2004-269588
Patent Document 4: JP-A-2004-352908

### Disclosure of the Invention

### Problem to Be Solved by the Invention

Objects of the present invention are to provide a process for producing a crystallized polylactic acid resin molding free from impairment of transparency without using an inorganic nucleating agent such as a polylactic acid, which would produce opacity in the molding, for a polylactic acid resin that undergoes slow crystallization during molding processing, a crystallization inducer for a polylactic acid resin, said crystallization inducer being for use in the process and excellent in compatibility, a master batch containing the crystallization inducer, and a polylactic acid resin molding.

### Means for Solving the Problem

The present inventors have enthusiastically repeated investigations to achieve the above-described objects of the present invention. As a result, it has been found that by kneading a crosslinked polylactic acid resin (resin A) or its master batch M as a crystallization inducer together with a non-crosslinked polylactic acid resin as a raw material and maintaining specific crystallization conditions during molding, crystallization of the whole resin composition including the non-crosslinked polylactic acid resin as the raw material is allowed to pronouncedly proceed, leading to the completion of the present invention.

Described specifically, the present invention provides a process for producing a crystallized polylactic acid resin molding, comprising melting and injecting the below-described compound (a) or (b) into a mold and holding the same in the mold, and then conducting cooling to crystallize a polylactic acid resin of a resulting molding without using an inorganic nucleating agent.

(a) a compound of a crystallization-inducing crosslinked polylactic acid resin A (which may hereinafter be called simply "the resin A" or "the crystallization inducer"), in at least a portion of which crosslinked points have been formed with a crosslink forming agent, and a non-crosslinked polylactic acid resin C (which may hereinafter be called simply "the resin C", in which the resin C is a principal component of the molding, wherein the compounding ratio of the resin C to the resin A is from 3 to 100 parts by weight of the resin C per parts by weight of the resin A; or
(b) a compound of a crystallization-inducing master batch M (which may hereinafter be called simply "the master batch M"), which comprises the resin A and a non-crosslinked polylactic acid resin B (which may hereinafter be called simply "the resin B") and abundantly contains the resin A, and a non-crosslinked polylactic acid resin C, in which the resin B is a carrier resin for the master batch M, wherein the compounding ratio of the resin B to the resin A is from 0.05 to 10 parts by weight of the resin B per parts by weight of the resin A, and the compounding ratio of the resin C to the master batch M is from 1 to 100 parts by weight of the resin C per parts by weight of the master batch M.

In the present invention as described above, the expressions "crystallization-inducing crosslinked polylactic acid resin A", "crystallization-inducing master batch M" and "composition for molding or compound" do not necessarily mean that the resin A, master batch M and compound have all been completely crystallized when they are in the form of pellets or the like obtained by delivering them from a kneading processing machine such as an extruder, for example, as strands into water and cutting the strands. The resin A, master batch M and compound each have a function that, when it is combined with the non-crosslinked polylactic acid resin C as a feed material and is molded under appropriate molding conditions such as mold temperature and in-mold holding time in an injection molding machine in a final molding processing stage, it can induce crystallization of the resin C to achieve crystallization of the whole molding.

In the present invention as described above, a resin A' , which is the resin A before crosslinking, the resin B and the resin C may be the same or different, or a mixture thereof; and the resin A', B or C is a polylactic acid ; or a random co-condensation polymerization, block co-condensation polymerization and/or graft co-condensation polymerization resin thereof.

In the present invention as described above, the crosslink forming agent may preferably be a radical generator and/or a polyfunctional crosslinking agent; the radical generator may preferably be at least one peroxide selected from peroxycarbonates, peroxyesters, diacyl peroxides, dialkyl peroxides, peroxyketals and hydroperoxides; the radical generator may preferably be at least one azo radical generator selected from 1,1'-azobiscycloalkanecarbonitriles, 2-(carbamoylazo)alkylnitriles and 2-phenylazo-4-alkoxy-2,4-dialkylalkylnitriles; and the polyfunctional crosslinking agent may preferably be at least one polyfunctional compound selected from polyepoxy compounds, polyisocyanate compounds, polymethylol compounds and polycarbodiimide compounds.

In the present invention as described above, the compounding ratio of the resin B to the resin A is from 0.05 to 10 parts by weight of the resin B per parts by weight of the resin A, and the compounding ratio of the resin C to the master batch M is from 1 to 100 parts by weight of the resin C per parts by weight of the master batch M; and the compounding ratio of the resin C to the resin A is from 3 to 100 parts by weight of the resin C per parts by weight of the resin A.

In the present invention as described above, the mold may preferably have a temperature of a crystallization temperature Tc of the melted resin ±30°C during the molding, and the resin may be held for a time of from 5 to 240 seconds in the mold.

In the present invention as described above, at least one additive selected from colorants, dispersants, antioxidants, ultraviolet absorbers, light stabilizers, flame retardants, antistatic agents, fillers, addition-polymerizable monomers and chain extenders may preferably be added in any one of a preparation step of the resin A, a preparation step of the master batch M, a preparation step of the compound (a or b) and the molding step of the compound (or b).

The present invention also describes a crystallization inducer A (resin A) including crosslinked points formed in at least a portion thereof by causing a crosslink forming agent to act on the resin A'; and further, a crystallization-inducing master batch M for a polylactic acid resin, comprising a resin B and the crystallization inducer A spread in the resin B.

The present invention also provides a compound for a polylactic acid resin molding, as further defined by claim 7 or 8 ; and a crystallized polylactic acid resin molding D, as further defined by claim 9 or 10.

In the present invention as described above, at least one additive selected from colorants, dispersants, antioxidants, ultraviolet absorbers, light stabilizers, flame retardants, antistatic agents, fillers, addition-polymerizable monomers and chain extenders may be incorporated in the above-described molding.

### Advantageous Effects of the Present Invention

According to the present invention, the crystallization inducer (resin A), which does not provide the resulting molding with impaired transparency owing to the non-use of an inorganic nucleating agent that would produce opacity in the molding and which is excellent in compatibility with a polylactic acid resin (resin C) as a feed material, and the master batch M containing the crystallization inducer (resin A) can be provided by obtaining, as a polylactic acid resin (resin A) with crosslinked points formed therein, a crystallization inducer capable of inducing crystallization in a polyester such as a polylactic acid resin the crystallization of which is slow during molding processing, especially a polylactic acid which is a plant-derived biomass plastic or by preparing the crystallization inducer into a master batch.

By adding the resin A or master batch M to the resin C upon molding processing, melting and kneading the resulting compound, and maintaining the melted and kneaded mass under specific crystal formation conditions in a molding stage, crystallization is induced in a portion of the resin C by the resin A, and then, the crystallization is allowed to propagate throughout the resin C to crystallize the resin C in its entirety, thereby making it possible to provide the polylactic acid resin molding D or E excellent in resin physical properties such as heat resistance without impairment of the transparency inherent to the resin.

In the present invention, the crystallization of the resin C is induced and is allowed to propagate throughout the resin C as described above by kneading the resin A and resin C and maintaining a particular temperature for a specific time as molding processing conditions to allow the crystallization of the resin C to proceed. The mechanism of this crystallization may presumably be elucidated as will be described hereinafter from the results of thermal analysis, X-ray diffraction and the like.

As a result of the melting and kneading of the resin A' and the crosslink forming agent in an extruder, the crosslink forming agent acts on molecules of the resin A' so that owing to inter-molecular point crosslinking in at least a portion of the resin A', a crosslinked structure is firstly formed to provide the resin A. However, the resin A in the extruder is flowing as a whole in the direction of rotation of a screw, and is under shearing. It is estimated that by a tension of the flowing resin A, crosslinked molecules of the resin A are firstly bent at crosslinking points as nodes, the bent molecules of the resin A are then pulled and fully stretched in the flowing direction, and as a result, the molecules of the resin A are caused to overlap each other and to form a molecular orientation specific to the resin A. It is also estimated that, as a result of the holding of the resin at a crystal formation temperature, the overlapped and oriented molecules of the resin A firstly crystallize by themselves and act as a template to progressively induce crystallization of adjacent molecules of the resin A, thereby causing the resin A to transform into a crystallized orientation as a whole.

It is also estimated that as the mechanism of formation of crystals in the step of forming the crystallized polylactic acid resin molding (D or E) with the resin A in the present invention, the resin A functions as a crystallization inducer for the resin C in a similar manner as described above, the melted and kneaded mass of the resin A or the master batch M, which contains the resin A, and the resin C is held at the specific time for the particular time in an injection molding machine for the formation of crystals in the resinmolding stage, and as a consequence, the crystal-forming molecules of the resin A successively act as a template for adjacent molecules of the resin C to propagate crystallization, thereby causing the whole molding to transform into a crystallized and oriented form.

Upon using the above-described resin A as a crystallization inducer for the resin C, it is more preferred, from the standpoint of allowing the crystallization-inducing and
crystallization-propagating effects for the resin C to be exhibited more evenly, to heat and knead the resin A with the resin B beforehand to evenly spread and dilute the resin A in the resin B and then to use the resulting compound as the master batch M rather than kneading the resin A with the resin C to directly mold a molding, because the resin A has a crosslinked structure formed through point crosslinking by the crosslink forming agent in at least a portion of the resin A'. Even when directly using the resin A without preparing it into a master batch, it is likewise preferred to thoroughly knead the resin A and resin C into a resin compound in an extruder and then to mold the compound in a molding machine.

As the mechanism of crystallization of the resin C by using, as a nucleating agent, fine powder of a known solid inorganic material such as talc as described in the patent documents referred to in the above, it is estimated that the melted resin C is gradually cooled into a metastable crystal state and the nucleating agent or the like incorporated in the resin C then acts as seeds to form crystals of the resin C. Therefore, the above-described crystallization of the resin C by the crystallization-inducing resin A or the master batch A in the present invention may be considered to take place through a crystallization mechanism which is totally different from that relying upon the inorganic material described above as a nucleating agent.

### Best Modes for Carrying out the Invention

The present invention will next be described in further detail based on preferred embodiments.
The polylactic acid resins for use in the present invention are referred to as the polylactic acid resin A', polylactic acid resin B and polylactic acid resin C, respectively, by distinguishing them depending on their processing steps. All of these resins are conventionally-known polylactic acid resins, each of which contains a number of ester bonds in its structure and is equipped with thermoplasticity. Particularly preferred are polylactic acid resins made of plant-derived raw materials as principal components being more particularly preferred. The resin A' , resin B and resin C may be the same or different, or may be mixtures thereof. Although pellets of the resins A, B and C as raw materials may be supplied in amorphous forms, semicrystalline forms or crystalline forms depending on their production conditions, they are all melted as resinous raw materials into amorphous forms in processing machines such as extruders or molding machines. These resinous raw materials polylactic acid resin A' , polylactic acid B and polylactic acid C) may hereinafter be collectively called simply "feed resin".

The feed resin is a polylactic acid ; or a random co-condensation polymerization, block co-condensation polymerization and/or graft co-condensation polymerization resin thereof.

Further, binary and ternary block copolymerization resins and mutual graft polymerization resins between polylactic acids and aromatic polyesters can also be mentioned. Examples can include binary and ternary block copolymerization resins and mutual graft polymerization resins of polylactic acid-polybutylene terephthalate and polylactic acid-polyethylene terephthalate Preferred from the standpoint of compatibility are binary and ternary block copolymerization resins containing polylactic acid chains at ends thereof and graft copolymerization products containing polylactic acid chains as graft chains.

Usable as the crosslink forming agent for the formation of a crosslinked structure in the resin A' in the present invention can be a known radical generator thermally decomposable to form free radicals to subject the resin A' to a radical coupling reaction or the resin A' together with an addition-polymerizable monomer to addition polymerization, or a known functional crosslinking agent that causes a crosslinking reaction with reactive groups of the resin.

Upon causing the crosslink forming agent to act on the resin A' to obtain the resin A with crosslinking points formed therein, the reaction between the resin A' and the crosslink forming agent can conducted in the form of a solution or resin dispersion, but the most preferred method is to form crosslinks in the resin A' in a melted state. To knead and crosslink the resin A' in an extruder by this method, it is preferred to use a radical generator that decomposes at the kneading temperature or a polyfunctional crosslinking agent that causes a crosslinking reaction at the kneading temperature. Preferred as a radical generator to be chosen is one the decomposition temperature of which for obtaining a half-life time of 1 minute is, for example, approximately from 130°C to 210°C when the kneading temperature of the resin A' is approximately from 190°C to 210°C as an indication, although the radical generator varies depending on the kneading temperature set for the resin A' in the extruder and cannot be definitely specified.

A specific example can be at least one organic peroxide selected from peroxycarbonates such as t-butylperoxy isopropyl carbonate, peroxyesters such as t-butyl peroxyacetate, t-butyl peroxy-2-ethylhexanoate, t-butyl peroxylaurate and t-butyl peroxybenzoate, diacyl peroxides such as benzoyl peroxide, dialkyl peroxides such as di-t-butyl peroxide and dicumyl peroxide, peroxyketals such as 2,2-bis(t-butylperoxy)butane, and hydroperoxides such as di-isopropylbenzene hydroperoxide.

Another specific example can be at least one azo radical generator selected from
1,1'-azobiscycloalkanecarbonitriles,
2-(carbamoylazo)alkylnitriles and
2-phenylazo-4-alkoxy-2,4-dialkylalkylnitriles.

A further specific example can be a compound containing in its molecule two or more reactive groups capable of reacting with reactive groups, for example, carboxyl groups or hydroxyl groups contained in the resin A', that is, at least one polyfunctional compound selected from known polyepoxy compounds, polyisocyanate compounds, polymethylol compounds and polycarbodiimide compounds.

The polyepoxy compounds can include glyceryl (di/tri)glycidyl ether, pentaerythritol (tri/tetra)glycidylether, sorbitolpolyglycidyl ether , styrene-glycidyl methacrylate (molar ratio: 1:1) copolymer, and the like; the polyisocyanate compounds can include a trimethylolpropane-isophorone diisocyanate adduct, a trimethylolpropane-hexamethylene diisocyanate adduct, and the like; and the polycarbodiimide compounds can include poly(hexamethylene carbodiimide)-bis(polypropylene glycol monobutyl ether urethane), poly(hexamethylene carbodiimide)-bis(oleylurethane), and the like.

As the amount of the crosslink forming agent to be used for the resin A', it is necessary to use the crosslink forming agent in such an amount that crosslinking points are formed between polymer molecules of the resin A' to form a molecular orientation of crosslinked polymer molecule chains in a melted state in a kneader and that in the step of preparing the resin A into a master batch and in the molding step of a molding, the resin A can be kneaded and evenly spread in a melt of the resin B to sufficiently function as a crystallization inducer. As will be mentioned subsequently herein, the function of the resin A as a crystallization inducer is not developed when the resin A contain sufficient crosslinking points. When the resin A contains excessively many crosslinking points, on the other hand, crosslinking proceeds so much that a gel-like polymer (resin A) is abundantly formed to provide the resin A with reduced melting performance, flowability, additive compatibility, etc., and further, to provide the finally-obtained polylactic acid resin moldings D,E with impaired external appearance, physical properties, etc.

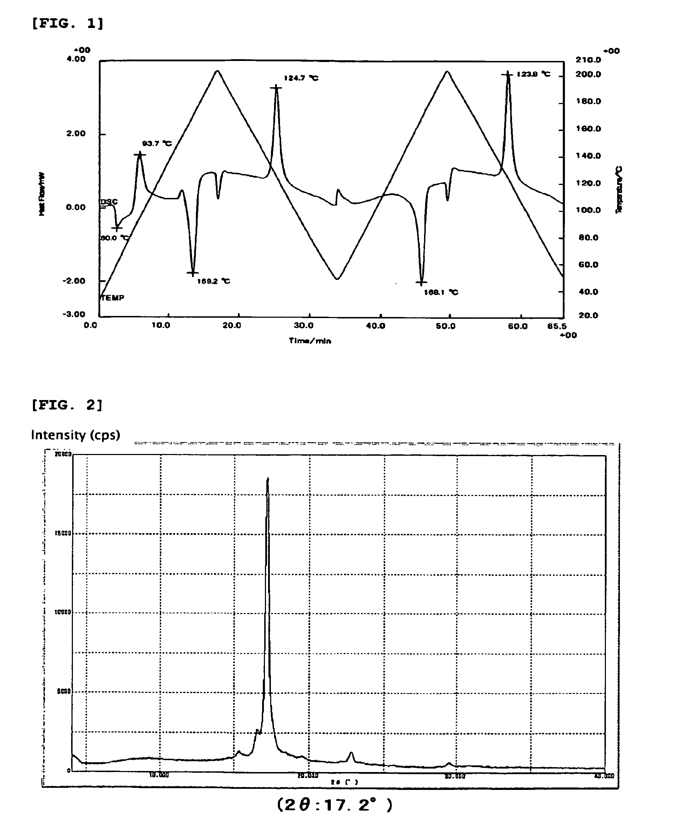

Described in the fourth row of Table 1 are peak temperatures upon cooling resins A, which had been obtained by varying the amount of t-butylperoxy isopropyl carbonate (purity: 95%) to be added as a peroxide to poly (L-lactic acid) (resin A'), as measured by a differential scanning calorimetric analysis in a similar manner as in Example 1. Pellets of the resin A-1 were obtained in Example 1(1) by reacting the peroxide (0.4 g, 0.0022 mole) with the resin A' (100 g), and a differential scanning calorimetric measurement (which may hereinafter be referred to as "DSC") diagram of the pellets of the resin A-1 is presented in FIG. 1. Each exothermic peak temperature upon cooling as measured by the differential scanning calorimetric analysis indicates a crystallization temperature which the corresponding resin sample showed under conditions (ramp-up rate: 10°C/min, ramp-down rate: 10°C/min) for the measurement. Further, an X-ray diffraction diagram of a plate molded from the thus-obtained pellets of the resin A-1 is presented in FIG. 2. A peak of high diffraction intensity appeared at a diffraction angle 2θ of 17.2°, thereby indicating that the plate was allowed to crystallize in its entirety.

**Table 1**

| | | 1 | 2 | 3 | 4 | 5 | 6 |
|---|---|---|---|---|---|---|---|
| Amount ratio of materials used | Resin A' (g) | 100 | 100 | 100 | 100 | 100 | 100 |
| | Peroxide (g) | 0.05 | 0.1 | 0.2 | 0.3 | 0.4 | 0.8 |
| Crystallinity of resin A | Peak temp. (°C) | None | None | 123 | 125 | 125 | 124 |

The amount of the crosslink forming agent to be used varies depending on the kind, molecular structure, molecular weight, molecular weight distribution and the like of the resin A' to be used and the kind, reactivity, reaction conditions, reaction rate and the like of the crosslink forming agent, and therefore, cannot be definitely determined. As an indication of the amount to be used per 100 g of the resin A', however, approximately 0.0015 mole or more is preferred. The upper limit is such an extent that the spreading of the resin A in the resin A' as the raw material for the resin A is not inhibited by the formation of excessive crosslinks in the resin A' , and may preferably be about 0.04 mole or less, with 0.02 mole or less being particularly preferred, per 100 g of the resin A'.

To effectively conduct the crosslinking of the resin A' with free radicals formed by decomposition of a peroxide or azo radical generator, addition polymerizability may be introduced in the resin A' by using an addition-polymerizable raw material, for example, an addition-polymerizable dicarboxylic acid such as maleic acid, fumaric acid or itaconic acid, an anhydride thereof, or a reactive derivative thereof such as an alkyl(carbon number: 1 to 6) ester thereof upon synthesizing the resin A' as described above. Together with such a radical generator, a crosslinking assisting component such as a conventionally-known addition-polymerizable monomer or addition-polymerizable oligomer may be added to the resin A'. Examples of the crosslinking assisting component can include polyfunctional monomers such as polyalkylene(carbon number: 2 to 6) glycol di(meth)acrylates, glyceryl tri(meth)acrylate, trimethylolpropane tri(meth)acrylate, triacylcyanurate; and monofunctional monomers such as dialkyl(carbon number: 1 to 7) itaconates.

The mixing ratio of the resin A to the resin B in the preparation step of the master batch M as a crystallization inducing resin composition is from 0.05 to 10 parts by weight, preferably from 0.5 to 5 parts by weight of the resin B per parts of the resin A. If the resin B is used in an amount of smaller than 0.05 parts by weight, the master batch M may not be obtained with the resin A fully diluted and spread therein, and from the aspect of heat melting performance, the master batch M may not be substantially different from the resin A. It is, therefore, not preferred to use the resin B in such a small amount. If the resin B is used in an amount of greater than 10 parts by weight, on the other hand, the resulting master batch B may hardly satisfy its objective as a high-concentration diluted resin composition although its heat melting performance is good.

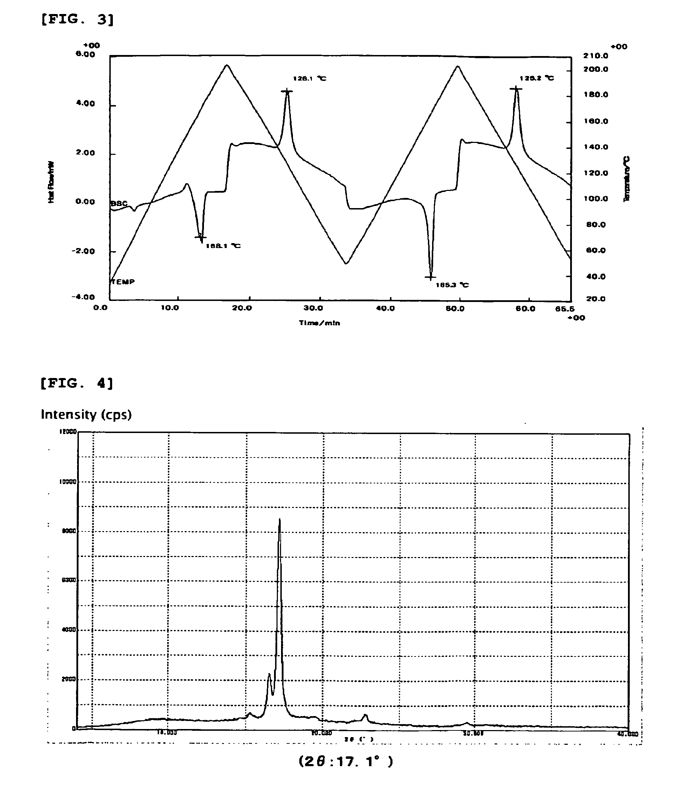

In Example 1(2), a master batch M-1 was prepared with a weight ratio of a resin A to a resin B at 1:1. FIG. 3 presents a differential scanning calorimetric measurement (DSC) diagram of the master batch M-1, in which a crystallization temperature appears at 126°C. FIG. 4 presents an X-ray diffraction diagram of a plate molded from pellets of the master batch M-1, in which a sharp peak of high diffraction intensity appears at 17.1°.

In the molding of the molding D as a final product, the mixing ratio upon diluting the master batch M in the resin C is from 1 to 100 parts by weight of the resin C per parts of the master batch M. As will be mentioned subsequently herein, it is however preferred to set the total amount of the resin C (including the resin B in the master batch) at 100 parts by weight or lower per parts by weight of the resin A.

In the present invention, the resin A, the master batch M and the compound (pellets) for use in the molding of the molding D are required to have a function to induce crystallization of the resin C in the molding step of the molding D. Before the molding step, the pellets themselves are not required to be fully crystallized. In the production step of each of the resin A, the master batch M and the compound for the molding D, for example, strands of the melted resin delivered from an extruder are cut in water under usual cooling conditions, so that the resulting pellets solidified with the resin being incomplete in crystallization also have a crystallization inducing function and are usable in the present invention.

To completely conduct the crystallization of the resin C in the molding step of the molding D, it is necessary to mix the master batch M and resin C, and upon conducting molding in an injection molding machine, to set as molding conditions a mold temperature and in-mold residence time appropriate for the crystallization of the resin C. The mold temperature may be set at the crystallization temperature of the resin C, while the melting temperature may be set at a temperature equal to or higher than the melting point of the resin.

In Example 1, a polylactic acid A-1 (resin A) and an amorphous polylactic acid (resin C) were mixed at 1:1, and were kneaded in a 25-mm twin-screw extruder with the cylinder temperature being set at 200°C to obtain pellet of a master batch M-1. The resultant pellets of the master batch M-1 and pellets of the polylactic acid (resin C) were mixed at a weight ratio of 2:8. Using a 2-oz injection molding machine, a molding test was conducted by varying the temperature of the mold and the cooling conditions for molded plates.

Differences among the crystallization degrees of the molded plates under the respective cooling conditions are shown in Table 2. Each molded plate was produced by taking it out of the mold upon elapse of the number of seconds of the corresponding preset in-mold residence time and immediately quenching it in water to terminate the advance of crystallization under remaining heat. The degree of crystallization of each molded resin plate was assessed based on a value of the advance degree of crystallization as obtained by calculating from a crystallization calorie upon DSC heating, and from a practical viewpoint, was also assessed from the degree of haze caused by the crystallization of the molded plate and the degree of an improvement in heat resistance. The assessment results are expressed by the following 4-stage signs.

**Table 2**

| | Mold temperature (°C) | | Cooling conditions | | | |
|---|---|---|---|---|---|---|
| | | Assessment of crystallization degree | In-mold residence time (sec) | | | |
| | | | 30 | 60 | 90 | 120 |
| 1 | 80 | Advance degree (%) | 0 | 2.5 | 3.1 | 4.8 |
| | | Assessment of crystallization | D | D | D | D |
| 2 | 90 | Advance degree (%) | 7.1 | 13.2 | 19.4 | 25.4 |
| | | Assessment of crystallization | C | C | C | C |
| 3 | 100 | Advance degree (%) | 16.9 | 26.1 | 36.4 | 41.2 |
| | | Assessment of crystallization | C | C | B | B |
| 4 | 110 | Advance degree (%) | 37.3 | 72.8 | 100 | 100 |
| | | Assessment of crystallization | B | A | A | A |

| | | | | | | |
|---|---|---|---|---|---|---|
| A: High crystallization form (advance degree of crystallization: 70 to 100%) B: Medium crystallization form (advance degree of crystallization: 30 to 70%) C: Low crystallization form (advance degree of crystallization: 5 to 30%) D: Amorphous form (advance degree of crystallization: 0 to 5%) | | | | | | |

For polylactic acids, the mold temperature may preferably be from 110°C to 120°C, that is, their crystallization temperatures Tc. For allowing the crystallization of a molding to advance in a mold, a sufficient in-mold residence time is important in addition to the mold temperature as shown in Table 2. The in-mold residence time is required to range approximately from 10 seconds to 240 seconds, although it varies depending on the setting of the mold temperature. For a general polyester resin, it is preferred to conduct molding at a mold temperature in a range of approximately 30°C above and below its crystallization temperature (Tc) (Tc ±30°C) for an in-mold residence time in a range of from approximately 5 to 240 seconds. With the premise that the crystallization proceeds completely, there is an outstanding demand for energy saving and improvements in productivity by short-cycle molding. With respect to the mold temperature and in-mold residence time, it is hence desired to determine optimal conditions by conducting preliminary trial production beforehand.

Upon production of the molding D, the dilution ratio of the master batch M with the polylactic acid C was also studied. In accordance with the above-described molding conditions, the master batch M-1 and the polylactic acid were mixed at ratios varied in four levels, respectively. By an injection molding machine, each resin composition was kneaded at a cylinder temperature of 190°C, and was molded under two molding conditions, respectively. Differences in the formation of crystals among the plates molded as described above are shown in Table 3. Table 3 also shows the crystallization temperatures of the respective molded plates as measured by differential scanning calorimetry and the figure numbers of their X-ray diffraction diagrams. Further, the advance degrees of crystallization in the respective molded resin plates were also assessed in accordance with similar standards as in Table 2. The heat distortion temperature of each specimen was measured under a load of 0.46 MPa. The measurement was conducted under the constant load by the three-point beam bending strength test while heating an oil bath at a constant rate, and an anti-heat-distortion temperature for practical use, which indicates heat resistance until a constant deformation, is shown. It is to be noted that the heat distortion temperature of a molded plate of the amorphous polylactic acid was 53°C.

**Table 3**

| | | | | | |
|---|---|---|---|---|---|
| Dilution ratio of M-1 with resin C (M-1:C) | | 2:8 | 2:18 | 2:48 | 2:98 |
| | (A-1 equivalent) | 1:9 | 1:19 | 1:49 | 1:99 |
| DSC | Crystallization temp. (°C) | 123 | 124 | 123 | 119 |

| Molding conditions | Measurement items | Measurement results of plates molded under varied molding conditions | | | |
|---|---|---|---|---|---|
| 40°C, 30 sec | X-ray diffraction diagram | FIG. 5 | FIG. 7 | FIG. 9 | FIG. 12 |
| | Heat distortion temp. (°C) | 53 | - | - | - |
| 110°C, 120 sec | X-ray diffraction diagram | FIG. 6 | FIG. 8 | FIG. 10 | FIG. 13 |
| | Crystallization degree | A | A | A | A |
| | Heat distortion temp.(°C) | 142 | 144 | - | - |

From the results of Table 3, it has been surprisingly found that as the content range of the resin A to be added in the form of the master batch M for the induction of crystallization of the resin C to obtain the molding D, the use of the resin A in an amount of approximately 1 wt% or more based on the resin C can induce the crystallization of the resin C and can crystallize the resin C in its entirety provided that the molding conditions are proper, although the content range cannot be definitely determined because of the properties of the used resin C, for example, the molecular structure, average molecular weight, molecular weight distribution and the like in regard to the resin C, the melting point, melt viscosity and the like as physical properties, and factors such as the kinds and amounts of additives and molding processing conditions.

Upon preparation of the resin A-1, the peroxide was used in an amount of 0.4 g (0.0022 mole) per 100 g of the polylactic acid (resin A'). By using the resultant resin A in an amount of 1 wt% based on the resin C, it was possible to crystallize the polylactic acid (resin C) in its entirety. The peroxide was decomposed, and obviously, did not exist in the resin A. Determining the amount of the peroxide to be used for the exhibition of its advantageous effect, however, the amount of the peroxide is calculated to be equivalent to 0.004 g (0.000022 mole) per 100 g of the molding. Compared with the fact that as shown above in Table 1, the resin crosslinked by the peroxide showed no crystallization temperature even when the used amount of the peroxide was 0.1g (0.0005 mole), it is surprising that the use of the peroxide in such a small amount can exhibit a function to induce the crystallization of the crosslinked resin A.

In the compound of the resin A and resin C in the present invention, the crystallization of the resin C can be achieved by the resin A the content of which is practically very low as described above. The compound, therefore, has excellent merits that the flow characteristics of the compound upon melting are not substantially different from those of the resin C upon melting and the molding processing of the compound and secondary processing such as the post-use collection, reuse and regeneration processing of the molding can be facilitated.

A description will next be made about the process that crystallizes the resin C into the molding D with the resin A as a crystallization inducer without using the master batch M. As described above, preferred is the process that sufficiently kneads the resin A and resin C into a resin compound in an extruder and then molds the resin compound into the molding E by a molding machine. As the composition of the molding, the resin C is used in an amount of from 3 to 100 parts by weight per parts by weight of the resin A. The properties, physical properties and the like of the compound and molding are similar to those of the molding produced by using the master batch M.

In the moldings D and E according to the present invention, at least one additive may preferably be added depending on their application purposes. The additive can be at least one additive selected from colorants, dispersants, antioxidants, ultraviolet absorbers, light stabilizers, flame retardants, antistatic agents, fillers, addition-polymerizable monomers and chain extenders.

The above-described additives and the like are divided into those intended to provide the resin C with improved additional values in the molding step of the molding D or E, those capable of taking part in the reaction with the resin C or producing physical action to provide the resin C with improved physical properties, and others depending on the purposes and functions of the additives, and are added in appropriate steps depending on the purposes and functions of the respective additives. The above-described additives and the like are each added to the resin A' , A, B or C or the compound, for example, in appropriate one of the preparation step of the resin A, the preparation step of the master batch M, the preparation step of the compound for the molding D or E and the molding step of the molding D or E, and melted and kneaded by a kneader such that they can be uniformly spread in the molding D or E.

A usable colorant can be a coloring matter or extender pigment selected from known dyes and known pigments such as organic pigments, inorganic pigments, carbon black pigment and extender pigments. As the organic pigments, inorganic pigments and extender pigments, conventionally-known, color, black and white pigments and extender pigments can be mentioned. Examples can include pigments such as azo pigments, polycondensation azo pigments, azomethine pigments, anthraquinone pigments, phthalocyanine pigments, perinone/perylene pigments, dipyrrolopyrrole pigments, indigo/thioindigo pigments, dioxazine pigments, quinacridone pigments, isoindolinone pigments and quinophthalone; iron oxide pigments, carbon black pigments, titanium oxide pigments, calcium carbonate pigments, silica, and the like.

Kneaders usable in the preparation step of the resin A, the preparation step of the master batch M and the preparation of the respective compounds in the present invention can include extruders such as single-screw extruder, twin-screw extruder and multi-screw extruder, three-roll mill, two-roll mill, pressure kneader, Banbury mixer, open-type two-screw continuous kneader, and the like, with extruders being particularly preferred. In the molding step of the molding D or E, screw-type extrusion forming machines such as single-screw extrusion forming machines, co-rotating or counter-rotating twin-screw extrusion forming machines and multi-screw extrusion forming machines; injection molding machines: rotary kneaders; single-screw or multi-screw, continuous kneaders; and the like can be used.

These kneaders, forming machines and molding machines can be used either singly or in combination by a usual method of resin kneading or resin forming or molding. In these kneaders, various segments such as screws, kneading disks and rotors can be selectively combined as desired in accordance with the purpose of the kneading, the kind of the material, and the composition. In extruders, various segments such as cylinders can be modified in length and shape as desired. For bringing about the crosslink forming reaction, the even kneading effect for the crystallization inducer, the even spreading effect for additives, and the like, it is also important to appropriately set kneading conditions such as the feeding rate of the material, the rotational speed(s) of the screw(s) or rotator(s) and the temperature of the kneader in accordance with the purpose. As molding conditions especially for a molding machine such as an injection molding machine, it is desired to set the mold temperature and in-mold residence time for the crystallization of a molding.

Biodegradable resins such as polylactic acids have rigid molecular structures, and therefore, are accompanied by a drawback that they are inferior in impact resistance and are brittle. It has, therefore, been proposed to make use of crosslinking by a radical generator in combination with a method that uses a resin modifying material to impart flexibility. In WO 03/066733 A1, unsaturated bonds are introduced in one or both of a polylactic acid and a resin modifying material, and chains of the resin modifying materials and those of the polylactic acid are crosslinked by a radical generator to improve their compatibility and to impart flexibility and transparency to the polylactic acid.

In JP-A-2001-64379, a polylactic acid and another aliphatic polyester are subjected to a crosslinking reaction with a radical generator to make them compatible with each other, so that high transparency and excellent mechanical properties are imparted. In JP-A-2003-171544, a polylactic acid and another aliphatic polyester are modified with an organic peroxide to provide an increased melt tension and strain hardening properties, thereby imparting good moldability.

These patent documents have proposed to introduce crosslinking bonds into a polylactic acid, but neither describe nor suggest that the resin A acts to promote the crystallization of polyester resins such as polylactic acids as in the present invention.

Further, JP-A-2005-220171 describes to the effect that the inclusion of a polylactic acid, which has a crosslinked structure, in a polylactic acid can accelerate the crystallization speed of a polylactic acid composition and that as a result, a molding of still higher heat resistance can be obtained. However, the crystallization of the polylactic acid relies upon the action of talc which is a known nucleating agent, and there is no description about such an effect that a lactic acid having a crosslinked structure (resin A) contributes to the crystallization of a polylactic acid as a feed material.

It is, therefore, neither described nor suggested at all in this patent document to crystallize the resin C with the resin A, in which crosslinking points are formed, or the master batch M, in which the resin A is evenly spread, as a crystallization inducer without using an inorganic material as a nucleating agent and to obtain a crystallized polylactic acid resin molding as in the present invention.

Crystallized polylactic acid resin moldings according to the present invention are provided with improved physical properties such as heat resistance, and moreover, the moldings relatively retain transparency as they contain no inorganic material or the like. As a consequence, these crystallized polylactic acid resin moldings can be widely used not only in application fields of conventional polyester resin moldings but also in application fields where such conventional polyester resin moldings have heretofore been unusable due to low heat resistance. For example, they can be used in a wide range of application fields such as sheets, films and nets; containers and trays; expanded materials; food packages; boxes for marine products and agricultural products, packaging boxes and shipping boxes; cushioning materials for electrical appliances and precision instruments; and soundproofing and/or heat insulating materials for constructions and roads.

### Examples

The present invention will next be described in detail based on specific examples and comparative examples, in which all designations of "parts" and "%" are by weight basis unless otherwise specifically indicated.

### Example 1

### (1) Preparation of resin A-1 (crystallization inducer)

To a powder (100 g) of a poly (L-lactic acid) (resin A', hereinafter called "polylactic acid"), t-butylperoxy isopropyl carbonate (purity: 95%; 0.4 g, 0.0022 mole) was added as a radical generator. After thoroughly mixed, the resulting mixture was kneaded in a 25-mm twin-screw extruder (L/D: 42, kneading temperature: 200°C), delivered in the form of strands into water and cooled there, and then cut by a pelletizer to prepare pellets of a resin A-1.

Differential scanning calorimetric measurement of the pellets of the resin A-1 obtained as described above was conducted twice continuously. A diagram of the pellets of the resin A-1 is presented in FIG. 1. In the first measurement, a sharp endotherm having a peak at 169°C and indicating melting of the pellets of the resin A-1 appeared upon heating, and a sharp exothermic peak indicating crystallization of the pellets of the resin A-1 appeared at 125°C upon cooling. In the second measurement, a sharp endotherm similarly appeared at 168°C upon heating, and an exotherm similarly appeared with a peak at 124°C as a result of crystallization upon cooling. The crystallization temperature was indicated to be 125°C in the first measurement and 124°C in the second measurement, and therefore, excellent reproducibility of the crystallization of the resin A-1 was shown. FIG. 2 presents an X-ray diffraction diagram of a plate molded from the thus-obtained pellets of the resin A-1. A sharp peak of high diffraction intensity appeared at a diffraction angle 2θ of 17.2°, thereby indicating that the plate was crystallized in its entirety.

### (2) Preparation of master batch M-1

After an aliquot (50 parts) of the pellets of the resin A-1 was mixed with pellets (50 parts) of a polylactic acid (resin B), the resulting mixture was kneaded in the twin-screw extruder, delivered in the form of strands into water and cooled there, and then cut by the pelletizer to prepare pellets of a master batch M-1.

As in the above-described preparation (1), differential scanning calorimetric measurement of the pellets of the master batch M-1 was conducted. A measurement diagram is presented in FIG. 3. Upon cooling, a sharp exothermic peak indicating crystallization of the pellets of the master batch A-1 appeared at 126°C. In the subsequent second measurement, a sharp exotherm indicating crystallization of the pellets of the master batch M-1 also similarly appeared with a peak at 125°C upon cooling. The first and second measurements showed excellent reproducibility of crystallization with a difference of 1°C therebetween. FIG. 4 presents an X-ray diffraction diagram of a plate obtained by molding the thus-obtained pellets of the resin A-1 in an injection molding machine. A sharp peak of high diffraction intensity appeared at a diffraction angle 2θ of 17.1°, thereby indicating that the plate molded from the pellets of the master batch M-1 was crystallized in its entirety.

### (3) Preparation of molding D-1

An aliquot (2 parts) of the pellets of the master batch M-1 obtained above in the preparation (2) was mixed in pellets (48 parts) of a polylactic acid (resin C). By the injection molding machine the cylinder temperature of which was set at 190°C, the resulting mixture was molded under molding conditions of 120°C mold temperature and 90 seconds in-mold residence time to obtain a molded plate D-1. The molded plate D-1 showed translucency caused by crystallization of the resin, but in the form of a film having a small thickness, substantial transparency was shown.

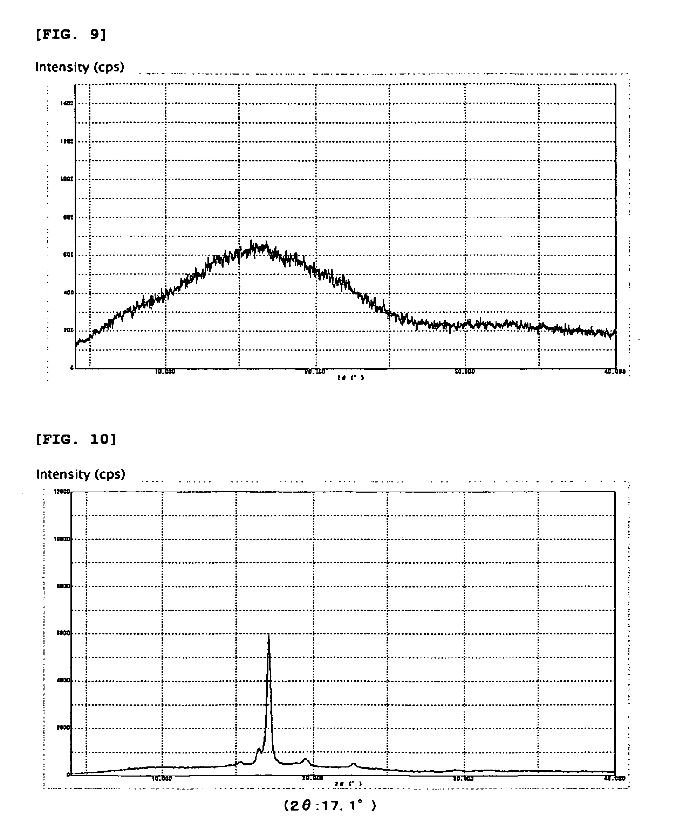

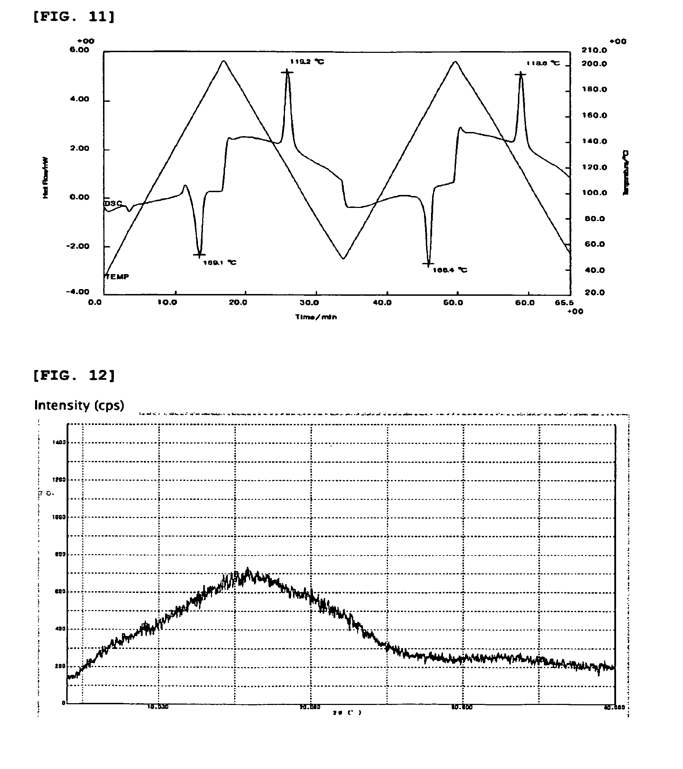

As in the above-described preparation (1), an X-ray diffraction diagram of the plate D-1 obtained as described above is presented in FIG. 10. A sharp peak of high diffraction intensity appeared at a diffraction angle 2θ of 17.1°, thereby indicating that the plate D-1 was crystallized in its entirety. Further, a measurement diagram obtained by conducting differential scanning calorimetric measurement of the plate D-1 is presented in FIG. 11. Upon cooling, a sharp exothermic peak indicating the crystallization of the plate appeared at 119°C. In the subsequent second measurement, a sharp exotherm indicating the crystallization of the plate also similarly appeared with a peak at 119°C upon cooling. The first and second measurements showed the same temperature, and hence, excellent reproducibility of crystallization.

### Examples 2-4

In a similar manner as in Examples 1(3), aliquots of the pellets of the master batch M-1 were mixed in aliquots of the pellets of the polylactic acid (resin C), respectively, as shown in Table 4. The resulting mixtures were separately molded by the injection molding machine to obtain molded plates D-2 to D-4 of the polylactic acid. Differential scanning colorimetric measurement and X-ray diffraction of the thus-obtained, molded plates were conducted. Exothermic peak temperatures upon cooling and peak angles 2θ in X-ray diffraction diagrams are shown in Table 4.

**Table 4**

| Example | | 2 | 3 | 1 | 4 |
|---|---|---|---|---|---|
| Ratio of materials | M-1 | 2 | 2 | 2 | 2 |
| | Polylactic acid | 8 | 18 | 48 | 98 |
| Designation of molded plates D | | D-2 | D-3 | D-1 | D-4 |
| DSC | Measurement diagram | - | - | - | FIG. 11 |
| | Peak temperature (°C) | 123 | 124 | 123 | 119 |
| X-ray diffraction | Diffraction diagram | FIG. 6 | FIG. 8 | FIG. 10 | FIG. 13 |
| | 2θ (°C) | 17.1 | 17.2 | 17.1 | 17.2 |

### Comparative Example 1 (molding of the resin C alone)

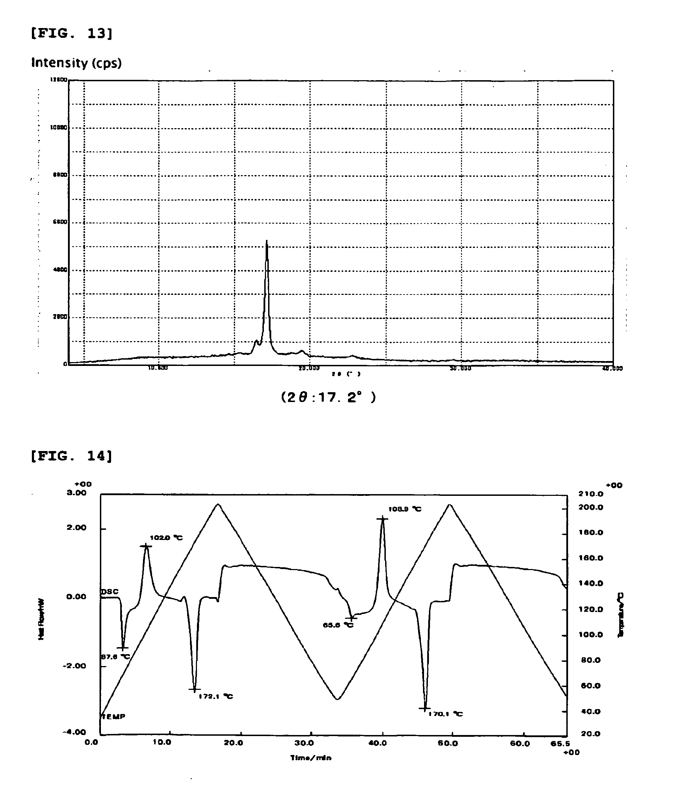

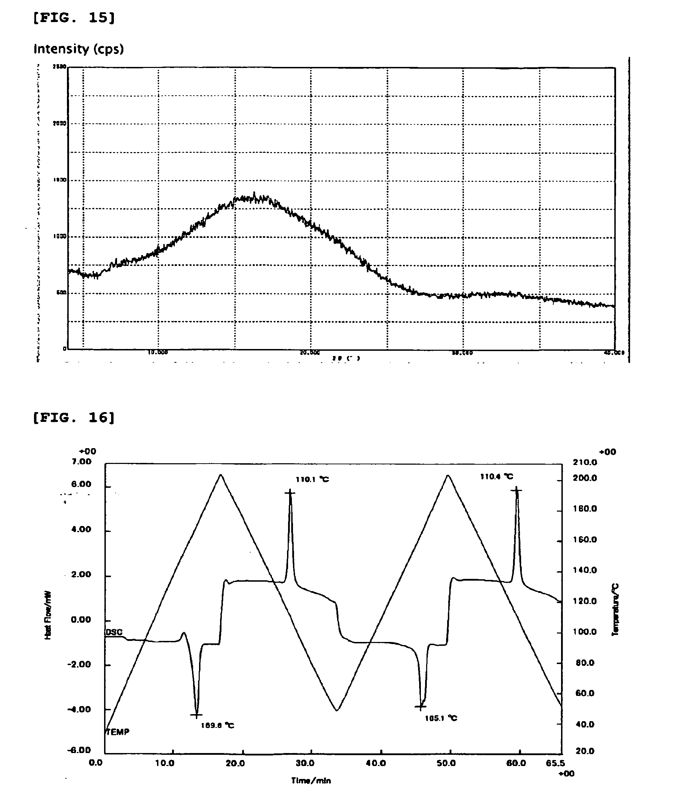

Only an aliquot of a resin powder of the polylactic acid (resin C) was kneaded in a twin-screw extruder (kneading temperature: 200°C) to form resin pellets, and a differential scanning calorimetric measurement of the pellets was conducted. FIG. 14 presents a differential scanning calorimetric measurement diagram of the pellets. Upon heating, a sharp endotherm indicating melting of the pellets appeared with a peak at 172°C, but the melted resin were cooled without appearance of an exothermic phenomenon caused by crystallization upon cooling such as those shown in Examples 1, 2 and 3. The heating and cooling of the pellets were subsequently conducted again, but only an endotherm indicating melting of the pellets was shown. An X-ray diffraction diagram of the pellets is presented in FIG. 15. No peak is seen in the diffraction diagram, thereby indicating that the pellets were in an amorphous form.

### Comparative Example 2 (crystallization of resin by inorganic nucleating agent)

After talc (11 parts) and calcium carbonate (1 parts) were added as inorganic nucleating agents to an aliquot (100 parts) of the polylactic acid (resin C) and the resulting composition was thoroughly mixed, the mixture was kneaded in the twin-screw extruder (kneading temperature: 200°C), delivered in the form of strands into water and cooled there, and cut by the pelletizer to prepare resin pellets containing the nucleating agents. The pellets were molded at a cylinder temperature of 190°C and a mold temperature of 105°C for a cooling time of 150 seconds to obtain a white plate. The white color of the plate is attributed to the added inorganic nucleating agents.

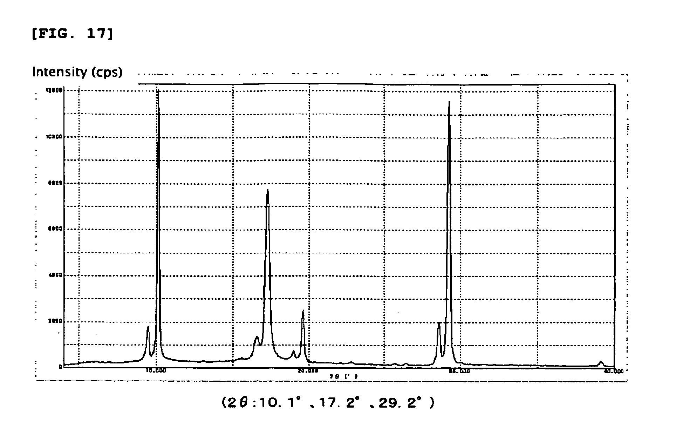

A differential scanning calorimetric measurement diagram of the above-described plate is presented in FIG. 16. A peak temperature that indicates crystallization of the plate was 110°C. FIG. 17 presents an X-ray diffraction diagram, and sharp peaks (ratio of relative intensities = 75:100:73) appeared at angles 2θ of 10.1°, 17.1° and 29.2°, respectively. X-ray diffraction peaks of talc and calcium carbonate appeared at 10.1° and 29.2°, respectively, and the diffraction peak at 17.1° indicates the crystallization of the polylactic acid.

### Example 5

An aliquot (97 parts) of the pellets of the polylactic acid, an aliquot (2 parts) of the pellets of the master batch M-1 and an aliquot (1 parts) of a pigmented polylactic acid master batch containing 10% of a phthalocyanine blue pigment were mixed, and the resulting mixture was kneaded in a twin-screw extruder (L/D: 52, kneading temperature: 200°C) to form resin pellets. The thus-obtained pellets were then molded under conditions of 115-117°C mold temperature and 120 seconds cooling time by the injection molding machine to obtain a sufficiently-crystallized molded plate of a pale blue color. The molded plate showed excellent heat resistance.

### Example 6

(1) A powder of a block polymerized polyester resin of polylactic acid-polybutylene terephthalate (PBT) (average molecular weight and content of PBT segments: about 3,000 and about 20 wt%, resin A') was provided. To an aliquot (100 parts) of the powder, t-butylperoxy isopropyl carbonate (0.4 parts) was added. After thoroughly mixed, the resulting mixture was similarly kneaded in the twin-screw extruder to prepare pellets of a resin A-2.

(2) After the pellets (50 parts) of the resin A-2 were thoroughly mixed with an aliquot (50 parts) of the pellets of the polylactic acid (resin B), the resulting mixture was similarly kneaded in the twin-screw extruder to prepare pellets of a master batch M-2.
(3) Similarly, aliquots of the pellets of the master batch M-2 and aliquots of the pellets of the polylactic acid (resin C) were then mixed at the dilution ratios of Example 1(3) and Examples 2-4, respectively, and the resulting mixtures were separately molded by the injection molding machine to obtain molded plates D of the polylactic acid, respectively. All the molded plates D also showed excellent crystallinity.

### Examples 7-9 (reference examples)

### (1) Preparation of master batches M

Following Example 1, pellets of resins A-3 to A-5 were prepared using the polybutylene succinate (PBS), polybutylene succinate adipate (PBSA) and poly(ε-caprolactone) (PCL), which are described below in column 1 of Table 5, as resins A' , respectively, and also using t-butylperoxy isopropyl carbonate (peroxide-1) as a peroxide.

**Table 5: Formulations for the preparation of resins**

| Example | 7 (1) | 8 (1) | 9 (1) |
|---|---|---|---|
| PBS (parts) | 100 | - | - |
| PBSA (parts) | - | 100 | - |
| PCL (parts) | - | - | 100 |
| Peroxide-1 (parts) | 0.4 | 0.4 | 0.4 |
| Designation of resin | Resin A-3 | Resin A-4 | Resin A-5 |

### (2) Preparation of master batches M and preparation of moldings D

Aliquots (50 parts) of the pellets of the resins A-3 to A-5 were then added to aliquots (50 parts) of the resin pellets of PBS, PBSA and PCL, respectively. After thoroughly mixed, the resulting mixtures were separately kneaded likewise in the twin-screw extruder to prepare master batches M-3 to M-5. (3) Next, the pellets of the master batches M-3 to M-5 were similarly mixed with aliquots of the pellets of PBS, PBSA and PCL at the dilution ratios of Example 1(3) and Examples 2 to 4, respectively, and the resulting mixtures were separately molded by the injection molding machine to obtain molded polyester plates D, respectively. All the molded plates also showed excellent crystallinity.

### Example 10

After aliquots (1 parts) of the pellets of the resin A-1 obtained in Example 1(1) were mixed with aliquots (19 parts, 49 parts and 99 parts of the pellets of the polylactic acidA (resin C), respectively, the resulting mixtures were separately kneaded by the twin-screw extruder (L/D: 52, kneading temperature: 200°C), delivered in the forms of strands into water and cooled there, and then cut by the pelletizer to form resin pellets, respectively. Aliquots of the thus-obtained pellets were separately molded by the injection molding machine under conditions of 115-117°C mold temperature and 120 seconds cooling time to obtain molded plates E-1 to E-3. All the molded plates also showed excellent crystallinity.

### Example 11

After aliquots (1 parts) of the pellets of the resin A-1 were mixed with aliquots (1 parts) of the pigmented polylactic acid master batch containing 10% of the phthalocyanine blue pigment and aliquots (18 parts, 48 parts and 98 parts) of the pellets of the polylactic acid (resin C), respectively, the resulting mixtures were separately kneaded by the twin-screw extruder (L/D: 52, kneading temperature: 200°C), delivered in the forms of strands into water and cooled there, and then cut by the pelletizer to form resin pellets, respectively. Aliquots of the thus-obtained pellets were separately molded by the injection molding machine under conditions of 115-117°C mold temperature and 120 seconds cooling time to obtain molded plates E-4 to E-6. All the molded plates also showed excellent crystallinity.

### Industrial Applicability

Moldings of polylactic acids and the like, typical examples of biomass plastics in recent years, are accompanied by a drawback that they are very slow in crystallinity and are low in heat resistance. Further, crystallization of such resins with fine powder of a conventionally-known inorganic material such as talc as a nucleating agent leads to another drawback that moldings become hazy and opaque.

In the present invention, it has been found that a polylactic acid resin A with point crosslinking formed between polymer molecules thereof under the action of a crosslink forming agent effectively acts as a crystallization inducer for an amorphous polylactic acid resin C. Upon molding processing, a master batch A with the resin B sufficiently diluted and spread at high concentrate in a resin B to allow the polylactic acid resin A to effectively act is prepared beforehand. The master batch M is then added to the amorphous polylactic acid resin C, the resulting mixture is kneaded, and a crystal-forming temperature is held for a crystal-forming time to crystallize the molded resin in its entirety. By the above-described procedure, it is possible to provide an excellent molding D improved in physical properties such as heat resistance.

Likewise, a molding D can be provided by sufficiently kneading the resin A and the polylactic acid resin C in an extruder or the like and then molding the resultant mixture by a molding machine. As the molding contains no inorganic material or the like, the molding relatively retains transparency. As a consequence, moldings according to the present invention can be used in a wide variety of application fields, including those where conventional polyester resin moldings have heretofore been unusable due to low heat resistance, for example, such as sheets, films and nets; containers and trays; expanded materials; food packages; boxes for marine products and agricultural products, packaging boxes and shipping boxes; cushioning materials for electrical appliances and precision instruments; and soundproofing and/or heat insulating materials for constructions and roads.

### Brief Description of the Drawings

[FIG. 1] A differential scanning calorimetric diagram of pellets of a resin A-1 obtained in Example 1(1).
[FIG. 2] An X-ray diffraction diagram of a plate of the resin A-1 obtained in Example 1(1).
[FIG. 3] A differential scanning calorimetric diagram of pellets of a master batch M-1 of dilution ratio (resin A: resin B) of 1:1 obtained in Example 1r(2).
[FIG. 4] An X-ray diffraction diagram of a plate of the master batch M-1 of dilution ratio (resin A:resin B) of 1:1 obtained in Example 1(2).

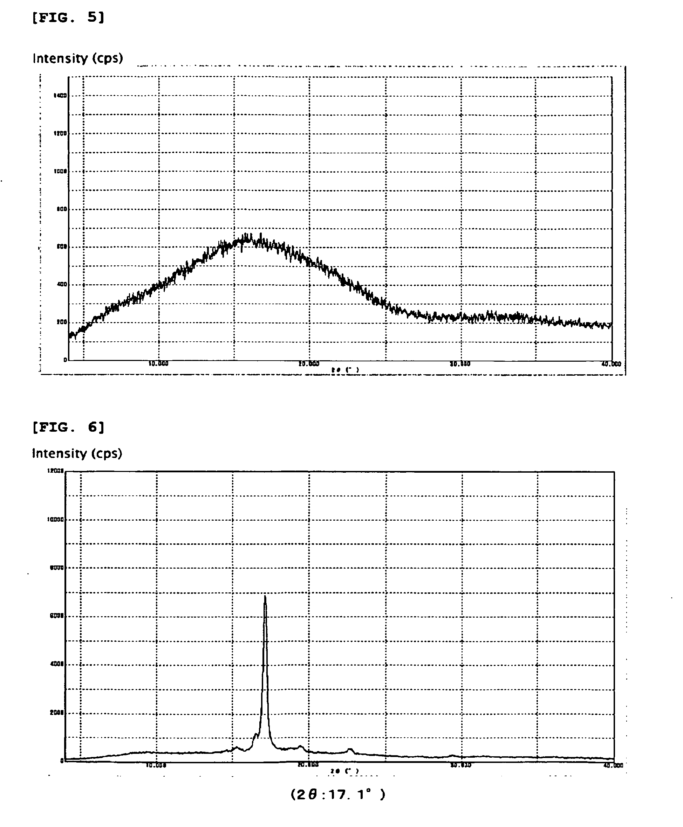

[FIG. 5] An X-ray diffraction diagram of a plate molded under molding conditions of 40°C and 30 seconds by using the master batch M-1 and the resin B at 2:8.
[FIG. 6] An X-ray diffraction diagram of a plate D-2 molded under molding conditions of 110°C and 120 seconds by using the master batch M-1 and the resin C at 2:8 in Example 2.

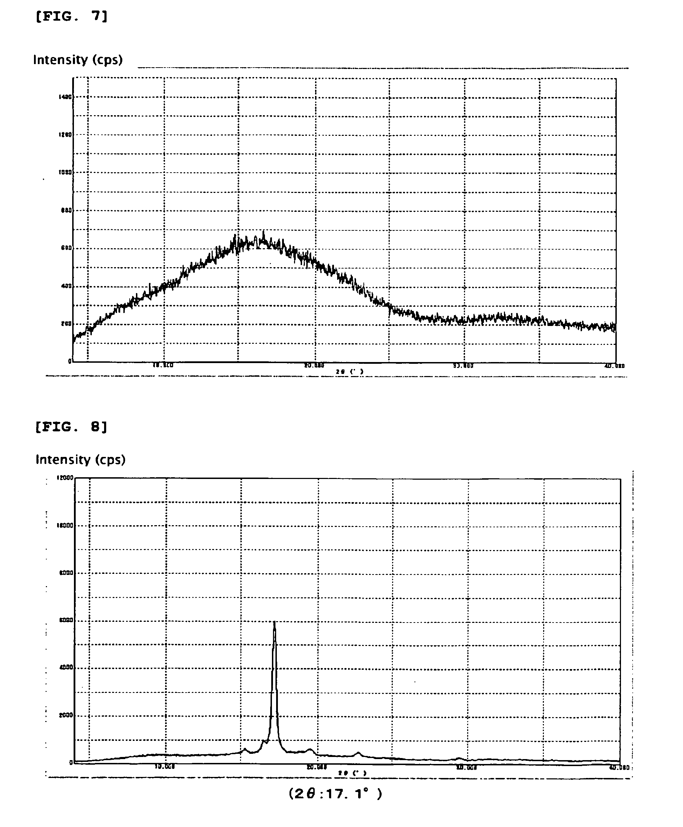

[FIG. 7] An X-ray diffraction diagram of a plate molded under molding conditions of 40°C and 30 seconds by using the master batch M-1 and the resin C at 2:18.
[FIG. 8] An X-ray diffraction diagram of a plate D-3 molded under molding conditions of 110°C and 120 seconds by using the master batch M-1 and the resin C at 2:18 in Example 3.
[FIG. 9] An X-ray diffraction diagram of a plate molded under molding conditions of 40°C and 30 seconds by using the master batch M-1 and the resin C at 2:48.
[FIG. 10] An X-ray diffraction diagram of a plate D-1 molded under molding conditions of 110°C and 120 seconds by using the master batch M-1 and the resin C at 2:48 in Example 1(3).
[FIG. 11] A differential scanning calorimetric diagram of the plate D-1 molded under molding conditions of 110°C and 120 seconds by using the master batch M-1 and the resin C at 2:48 in Example 1(3).
[FIG. 12] An X-ray diffraction diagram of a plate molded under molding conditions of 40°C and 30 seconds by using the master batch M-1 and the resin C at 2:98.
[FIG. 13] An X-ray diffraction diagram of a plate D-4 molded under molding conditions of 110°C and 120 seconds by using the master batch M-1 and the resin C at 2:98 in Example 4.
[FIG. 14] A differential scanning calorimetric diagram of pellets of a resin obtained in Comparative Example 1.
[FIG. 15] An X-ray diffraction diagram of a molded resin plate obtained in Comparative Example 1.
[FIG. 16] A differential scanning calorimetric diagram of pellets of a resin obtained in Comparative Example 2.
[FIG. 17] An X-ray diffraction diagram of a molded plate obtained in Comparative Example 2.

## Claims

1. A process for producing a crystallized polylactic acid resin molding, comprising melting and injecting the below-described compound (a) into a mold and holding the same in the mold, and then conducting cooling to crystallize a polylactic acid resin of a resulting molding without using an inorganic nucleating agent:
(a) a compound of a crystallization-inducing crosslinked polylactic acid resin A, in at least a portion of which crosslinked points have been formed with a crosslink forming agent, and a non-crosslinked polylactic acid resin C;
wherein the compounding ratio of the resin C to the resin A is from 3 to 100 parts by weight of the resin C per parts by weight of the resin A.

2. A process for producing a crystallized polylactic acid resin molding, comprising melting and injecting the below-described compound (b) into a mold and holding the same in the mold, and then conducting cooling to crystallize a polylactic acid resin of a resulting molding without using an inorganic nucleating agent:
(b) a compound of a crystallization-inducing master batch M which comprises the resin A as defined in claim 1 and a non-crosslinked polylactic acid resin B and abundantly contains the resin A, and a non-crosslinked polylactic acid resin C;
wherein the compounding ratio of the resin B to the resin A is from 0.05 to 10 parts by weight of the resin B per parts by weight of the resin A, and the compounding ratio of the resin C to the master batch M is from 1 to 100 parts by weight of the resin C per parts by weight of the master batch M.

3. The process according to claim 1 or 2, wherein a crosslinking polylactic acid resin A' , which is the resin A before crosslinking, the resin B and the resin C may be the same or different, or a mixture thereof.

4. The process according to claim 1 or 2, wherein the crosslink forming agent is a radical generator and/or a polyfunctional crosslinking agent.

5. The process according to claim 1 or 2, wherein the mold has a temperature of a crystallization temperature Tc of the melted resin mixture ±30°C during the molding, and the resin is held for a time of from 5 to 240 seconds in the mold.

6. The process according to claim 1 or 2, wherein, in compound (a) and (b), the ratio of resin A to resin C (A:C) is from 1:9 to 1:99 parts by weight.

7. A compound for a polylactic acid resin molding, comprising a crystallization-inducing master batch M and another non-crosslinked polylactic acid resin C kneaded together, wherein the compound is free of an inorganic nucleating agent,
said crystallization-inducing master batch M comprising
(i) a non-crosslinked polylactic acid resin B and
(ii) a crystallization inducer A obtainable by causing a crosslink forming agent to act on a crosslinking polylactic acid resin to form crosslinked points in at least a portion thereof,
wherein the compounding ratio of the resin B to the crystallization inducer A is from 0.05 to 10 parts by weight of the resin B per parts by weight of the crystallization inducer A, and the compounding ratio of the resin C to the master batch M is from 1 to 100 parts by weight of the resin C per parts by weight of the master batch M.

8. A compound for a polylactic acid resin molding, comprising a non-crosslinked polylactic acid resin C and a crystallization inducer A added in the non-crosslinked polylactic acid resin C, wherein the compound is free of an inorganic nucleating agent,
wherein the crystallization inducer A is obtainable by causing a crosslink forming agent to act on a crosslinking polylactic acid resin to form crosslinked points in at least a portion thereof, and
wherein the compounding ratio of the resin C to the crystallization inducer A is from 3 to 100 parts by weight of the resin C per parts by weight of the crystallization inducer A.

9. A crystallized polylactic acid resin molding obtainable by molding a non-crosslinked polylactic acid resin C and a crystallization-inducing master batch M added therein, wherein the molding is free of an inorganic nucleating agent and
wherein the crystallization-inducing master batch M comprises a non-crosslinked polylactic acid resin B and, spread in the non-crosslinked polylactic acid resin B, a crystallization inducer A obtainable by causing a crosslink forming agent to act on a crosslinking polylactic acid resin to form crosslinked points in at least a portion thereof;
wherein the compounding ratio of the resin B to the crystallization inducer A is from 0.05 to 10 parts by weight of the resin B per parts by weight of the crystallization inducer A, and the compounding ratio of the resin C to the master batch M is from 1 to 100 parts by weight of the resin C per parts by weight of the master batch M.

10. A crystallized polylactic acid resin molding obtainable by molding a compound of a crystallization inducer A, which is obtainable by causing a crosslink forming agent to act on a crosslinking polylactic acid resin to form crosslinked points in at least a portion thereof, and a non-crosslinked polylactic acid resin C,
wherein the molding is free of an inorganic nucleating agent, and
wherein the compounding ratio of the resin C to the crystallization inducer A is from 3 to 100 parts by weight of the resin C per parts by weight of the crystallization inducer A.

## Patentansprüche

1. Verfahren zur Herstellung eines kristallisierten Polymilchsäureharz-Formteils, umfassend Schmelzen und Einspritzen der unten beschriebenen Zusammensetzung (a) in eine Form und Halten derselben in der Form, dann Kühlen, um ein Polymilchsäureharz eines erhaltenen Formteils zu kristallisieren ohne Verwendung eines anorganischen kristallkeimbildenden Mittels:
(a) eine Zusammensetzung eines kristallisationsinduzierenden vernetzten Polymilchsäureharzes A, wobei zumindest in einem Teil desselben Vernetzungspunkte mit einem Vernetzungsmittel ausgebildet wurden, und eines nicht vernetztes Polymilchsäureharzes C;
wobei das Mischungsverhältnis des Harzes C zum Harz A von 3 bis 100 Gewichtsteilen des Harzes C pro Gewichtsteil Harz A beträgt.

2. Verfahren zur Herstellung eines kristallisierten Polymilchsäureharz-Formstücks, umfassend Schmelzen und Einspritzen der unten beschriebenen Zusammensetzung (b) in eine Form und Halten derselben in der Form und dann Kühlen, um ein Polymilchsäureharz eines erhaltenen Formstücks zu kristallisieren, ohne Verwendung eines anorganischen kristallkeimbildenden Mittels:
(b) eine Zusammensetzung einer kristallisationsinduzierenden Vormischung (master batch) M, die das Harz A wie in Anspruch 1 definiert und ein nicht vernetztes Polymilchsäureharz B enthält und das Harz A in großer Menge enthält, und eines nicht vernetzten Milchsäureharzes C;
wobei das Mischungsverhältnis des Harzes B zum Harz A von 0,05 bis 10 Gewichtsteilen des Harzes B pro Gewichtsteil Harz A beträgt, und das Mischungsverhältnis des Harzes C zur Vormischung M von 1 bis 100 Gewichtsteilen des Harzes C pro Gewichtsteil der Vormischung M beträgt.

3. Das Verfahren gemäß Anspruch 1 oder 2, worin ein vernetzendes Polymilchsäureharz A', das das Harz A vor dem Vernetzen ist, das Harz B und das Harz C gleich oder verschieden sein können oder eine Mischung davon.

4. Das Verfahren gemäß Anspruch 1 oder 2, worin das Vernetzungsmittel ein Radikalbildner und/oder ein polyfunktionelles Vernetzungsmittel ist.

5. Das Verfahren gemäß Anspruch 1 oder 2, worin die Form eine Temperatur einer Kristallisationstemperatur Tc der geschmolzenen Harzmischung ± 30°C während des Formens aufweist und das Harz über einen Zeitraum von 5 bis 240 Sekunden in der Form gehalten wird.

6. Das Verfahren gemäß Anspruch 1 oder 2, worin in der Zusammensetzung (a) und (b) das Verhältnis von Harz A zum Harz C (A:C) von 1:9 bis 1:99 Gewichtsteilen beträgt.

7. Zusammensetzung für ein Polymilchsäureharz-Formteil, umfassend eine kristallisationsinduzierende Vormischung (master batch) M und ein anderes nicht vernetztes Polymilchsäureharz C, die verknetet sind, wobei die Zusammensetzung frei von einem kristallkeimbildenden Mittel ist,
wobei die kristallisationsinduzierende Vormischung M umfasst
(i) ein nicht vernetztes Polymilchsäureharz B und
(ii) einen Kristallisationsinduktor A erhältlich durch Einwirken eines Vernetzungsmittels auf ein vernetzendes Polymilchsäureharz, um Vernetzungspunkte zumindest in einem Teil davon zu bilden,
wobei das Mischungsverhältnis des Harzes B zum Kristallisationsinduktor A von 0,05 bis 10 Gewichtsteile des Harzes B pro Gewichtsteil des Kristallisationsinduktors A beträgt, und das Mischungsverhältnis des Harzes C zur Vormischung M von 1 bis 100 Gewichtsteilen des Harzes C pro Gewichtsteil der Vormischung M beträgt.

8. Zusammensetzung für ein Polymilchsäureharz-Formteil, umfassend ein nicht vernetztes Polymilchsäureharz C und einen Kristallisationsinduktor A, der zum nicht vernetzten Polymilchsäureharz C zugegeben ist, wobei die Zusammensetzung frei von einem anorganischen kristallkeimbildenden Mittel ist,
wobei der Kristallisationsinduktor A erhältlich ist durch Einwirken eines Vernetzungsmittels auf ein vernetzendes Polymilchsäureharz, um Vernetzungspunkte zumindest in einem Teil desselben zu bilden, und
worin das Mischungsverhältnis des Harzes C zum Kristallisationsinduktor A von 3 bis 100 Gewichtsteilen des Harzes C pro Gewichtsteil des Kristallisationsinduktors A beträgt.

9. Kristallisiertes Polymilchsäureharz-Formteil, erhältlich durch Formen eines nicht vernetzten Polymilchsäureharzes C und einer hinzugegebenen kristallisationsinduzierenden Vormischung (master batch) M, wobei das Formteil frei von einem anorganischen kristallkeimbildenden Mittel ist und
worin die kristallisationsinduzierende Vormischung M ein nicht vernetztes Polymilchsäureharz B und, verteilt in dem nicht vernetzten Polymilchsäureharz B, einen Kristallistationsinduktor A enthält, der erhältlich ist durch Einwirken eines Vernetzungsmittels auf ein vernetzendes Polymilchsäureharz, um Vernetzungspunkte zumindest in einem Teil desselben zu bilden;
worin das Mischungsverhältnis des Harzes B zum Kristallisationsinduktor A von 0,05 bis 10 Gewichtsteilen des Harzes B pro Gewichtsteil des Kristallisationsinduktors A beträgt, und das Mischungsverhältnis des Harzes C zur Vormischung M von 1 bis 100 Gewichtsteilen des Harzes C pro Gewichtsteil der Vormischung M beträgt.

10. Kristallisiertes Polymilchsäureharz-Formteil, erhältlich durch Formen einer Zusammensetzung eines Kristallisationsinduktors A, der erhältlich ist durch Einwirken eines Vernetzungsmittels auf ein vernetzendes Polymilchsäureharz, um Vernetzungspunkte in zumindest einem Teil desselben zu bilden, und eines nicht vernetzten Polymilchsäureharzes C,
wobei das Formteil frei von einem anorganischen kristallkeimbildenden Mittel ist, und
worin das Mischungsverhältnis des Harzes C zum Kristallisationsinduktor A von 3 bis 100 Gewichtsteilen des Harzes C pro Gewichtsteil des Kristallisationsinduktors A beträgt.

## Revendications

1. Procédé pour produire un moulage de résine d'acide polylactique cristallisée, comprenant la fusion et l'injection du composé (a) décrit ci-dessous dans un moule et le maintien de celui-ci dans le moule, puis la réalisation d'un refroidissement pour cristalliser une résine d'acide polylactique d'un moulage résultant sans utiliser d'agent de nucléation inorganique :
(a) un composé d'une résine d'acide polylactique réticulée inducteur de cristallisation A, dont au moins une partie des points réticulés ont été formés avec un agent de formation de liaisons réticulaires, et d'une résine d'acide polylactique non réticulée C ;
dans lequel le rapport de mélange de la résine C sur la résine A est de 3 à 100 parties en poids de la résine C par parties en poids de la résine A.

2. Procédé pour produire un moulage de résine d'acide polylactique cristallisée, comprenant la fusion et l'injection du composé (b) décrit ci-dessous dans un moule et le maintien de celui-ci dans le moule, puis la réalisation d'un refroidissement pour cristalliser une résine d'acide polylactique d'un moulage résultant sans utiliser d'agent de nucléation inorganique :
(b) un composé d'un mélange maître inducteur de cristallisation M qui comprend la résine A telle que définie dans la revendication 1 et une résine d'acide polylactique non réticulée B et qui contient la résine A en abondance, et d'une résine d'acide polylactique non réticulée C ;
dans lequel le rapport de mélange de la résine B sur la résine A est de 0,05 à 10 parties en poids de la résine B par parties en poids de la résine A, et le rapport de mélange de la résine C sur le mélange maître M est de 1 à 100 parties en poids de la résine C par parties en poids du mélange maître M.

3. Procédé selon la revendication 1 ou 2, dans lequel une résine d'acide polylactique de réticulation A' , qui est la résine A avant réticulation, la résine B et la résine C peuvent être identiques ou différentes, ou un mélange de celles-ci.

4. Procédé selon la revendication 1 ou 2, dans lequel l'agent de formation de liaisons réticulaires est un générateur de radicaux et/ou un agent de réticulation polyfonctionnel.

5. Procédé selon la revendication 1 ou 2, dans lequel le moule présente une température d'une température de cristallisation T_{c} du mélange de résines fondues de ± 30 °C pendant le moulage, et la résine est maintenue dans le moule pendant une durée de 5 à 240 secondes.

6. Procédé selon la revendication 1 ou 2, dans lequel, dans les composés (a) et (b), le rapport de la résine A sur la résine C (A:C) est de 1:9 à 1:99 parties en poids.

7. Composé pour un moulage de résine d'acide polylactique, comprenant un mélange maître inducteur de cristallisation M et une autre résine d'acide polylactique non réticulée C malaxés ensemble, dans lequel le composé est exempt d'agent de nucléation inorganique,
ledit mélange maître inducteur de cristallisation M comprenant
(i) une résine d'acide polylactique non réticulée B et
(ii) un inducteur de cristallisation A pouvant être obtenu en amenant un agent de formation de liaisons réticulaires à agir sur une résine d'acide polylactique de réticulation pour former des points réticulés dans au moins une partie de celle-ci,
dans lequel le rapport de mélange de la résine B sur l'inducteur de cristallisation A est de 0,05 à 10 parties en poids de la résine B par parties en poids de l'inducteur de cristallisation A, et le rapport de mélange de la résine C sur le mélange maître M est de 1 à 100 parties en poids de la résine C par parties en poids du mélange maître M.

8. Composé pour un moulage de résine d'acide polylactique comprenant une résine d'acide polylactique non réticulée C et un inducteur de cristallisation A ajouté dans la résine d'acide polylactique non réticulée C, dans lequel le composé est exempt d'agent de nucléation inorganique,
dans lequel l'inducteur de cristallisation A peut être obtenu en amenant un agent de formation de liaisons réticulaires à agir sur une résine d'acide polylactique de réticulation pour former des points réticulés dans au moins une partie de celle-ci, et
dans lequel le rapport de mélange de la résine C sur l'inducteur de cristallisation A est de 3 à 100 parties en poids de la résine C par parties en poids de l'inducteur de cristallisation A.

9. Moulage de résine d'acide polylactique cristallisée pouvant être obtenu en moulant une résine d'acide polylactique non réticulée C et un mélange maître inducteur de cristallisation M ajouté dans celle-ci, dans lequel le moulage est exempt d'agent de nucléation inorganique et
dans lequel le mélange maître inducteur de cristallisation M comprend une résine d'acide polylactique non réticulée B et, réparti dans la résine d'acide polylactique non réticulée B, un inducteur de cristallisation A pouvant être obtenu en amenant un agent de formation de liaisons réticulaires à agir sur une résine d'acide polylactique de réticulation pour former des points réticulés dans au moins une partie de celle-ci ;
dans lequel le rapport de mélange de la résine B sur l'inducteur de cristallisation A est de 0,05 à 10 parties en poids de la résine B par parties en poids de l'inducteur de cristallisation A, et le rapport de mélange de la résine C sur le mélange maître M est de 1 à 100 parties en poids de la résine C par parties en poids du mélange maître M.

10. Moulage de résine d'acide polylactique cristallisée pouvant être obtenu en moulant un composé d'un inducteur de cristallisation A, qui peut être obtenu en amenant un agent de formation de liaisons réticulaires à agir sur une résine d'acide polylactique de réticulation pour former des points réticulés dans au moins une partie de celle-ci, et une résine d'acide polylactique non réticulée C,
dans lequel le moulage est exempt d'agent de nucléation inorganique, et
dans lequel le rapport de mélange de la résine C sur l'inducteur de cristallisation A est de 3 à 100 parties en poids de la résine C par parties en poids de l'inducteur de cristallisation A.
